# EUROPEAN PATENT APPLICATION

(11) **EP 2 752 815 A1**
(43) Date of publication of application: **09.07.2014**
(21) Application number: 13198235.7
(22) Date of filing: 18.12.2013
(51) Int. Cl.: G06T 7/00, H04N 5/262, H04N 13/00

(54) **Display method and display apparatus**

(30) Priority: 02.01.2013 KR 20130000377
(71) Applicant: Samsung Electronics Co., Ltd, Gyeonggi-do 443-742 (KR)
(72) Inventor: Lee, Bong-geun, Gyeonggi-do (KR)
(74) Representative: Hewett, Jonathan Michael Richard

(57) **Abstract**

A display method is provided. The display method according to various exemplary embodiments includes: extracting stereoscopic information of an image frame; adjusting at least one of brightness and saturation regarding at least one object included in the image frame based on the extracted stereoscopic information; and displaying an image frame including the adjusted object.

## Description

The present invention relates to a display method and display apparatus, and more specifically, to a display method and display apparatus, which enhances presence when watching an ultra definition television (UD TV).

Many hardware technologies have been proposed in a multi-media playback apparatus to maximize a feeling of presence, by which a user feels as if being in the field of an image.

Taking examples only in terms of a display system, a UD TV provides a realistic image by improving resolution. That is, the UD TV has a pixel number of 4K (3840x2160) and 8K (7860x4320) per screen, such that the resolution thereof is 4 times and 16 times that of an FHD (1920x1080) TV. Thus, high resolution enables a high-definition image quality, and a small pixel size allows a user to watch without recognizing pixels at a short distance, such that an improved presence is provided by high-definition image quality compared to the FHD.

Another example is a stereoscopic display system, such as a 3-dimensional television (3D TV).

The stereoscopic display system may be largely divided into an autostereoscopic system in which glasses are not needed to watch, and a glasses type system in which glasses are needed to watch. The autostereoscopic 3D display apparatus displays a multi-viewpoint image, which is spatially shifted, by using Parallax Barrier technology or Lenticular lens to project lights corresponding to different viewpoint images to the left eye and the right eye of a viewer, enabling a user to feel or see a stereoscopic effect.

In contrast, the glasses type system, which includes glasses separately for watching a display apparatus, displays a left-eye image and a right-eye image alternatively, or display images by dividing regions of a screen, such that a viewer can watch a stereoscopic image selectively through the glasses.

As stated above, in the stereoscopic display system, a user watches 3 dimensional images, thereby feeling an improved presence compared to a 2 dimensional image. However, as hardware requirements need to be satisfied in order to improve the feeling of presence through the high definition panel as mentioned above, there is a limitation in that product costs are increased and developing manufacture technology is a prerequisite.

Further, as the stereoscopic display system allows the user to feel presence through a stereoscopic effect by considering binocular cues, such as a binocular visual disparity, there is a drawback in that the system can be used only in a 3D display environment.

For this reason, a method for improving presence in 2D image environment is required, regardless of a definition of a panel.

An object of the embodiments is to provide a display method and a display apparatus for improving presence in a 2D image environment through a signal processing regardless of a panel definition.

Additional aspects and/or advantages will be set forth in part in the description which follows and, in part, will be apparent from the description, or may be learned by practice of the embodiments.

An object of the embodiments is to provide a display method and a display apparatus, which enhance presence in a 2D environment through a signal processing, regardless of a panel definition.

In order to achieve the above object, one or more exemplary embodiments of the present invention provide a display method, which includes: extracting stereoscopic information of an image frame; adjusting at least one of brightness and saturation regarding at least one object included in the image frame based on the extracted stereoscopic information; and displaying an image frame including the adjusted object.

The stereoscopic information may be extracted based on at least one of information extracted based on an object size, an object height, a visual field size and aerial perspective, information extracted based on linear perspective, information extracted based on texture gradient and overlapping information between objects.

If it is determined that a first object included in the image frame is relatively more distant than a second object, the adjusting decreases brightness of the first object by a first predetermined value, or increases brightness of the second object by a second predetermined value.

Further, if it is determined that a first object included in the image frame is relatively more distant than a second object, the adjusting decreases saturation of the first object by a first predetermined value, or increases saturation of the second object by a second predetermined value.

The display method may further include generating a brightness map or a saturation map based on the stereoscopic information, in which the adjusting may adjust brightness and saturation regarding at least one object included in the image frame based on the generated brightness map and a saturation map.

The display method may further include receiving a user command, in which the adjusting may adjust at least one of brightness and saturation of the image frame according to the received user command.

The user command may be a command to set an adjustment amount of at least one of brightness and saturation of the image frame.

One or more exemplary embodiments provide a non-transitory recording medium, which includes a program to perform the above-mentioned display method.

One or more exemplary embodiments provide a display apparatus, which may include a stereoscopic information extracting unit configured to extract stereoscopic information of an image frame; an image adjusting unit configured to adjust at least one of brightness and saturation regarding at least one object included in the image frame based on the extracted stereoscopic information; and a display unit configured to display an image frame including the adjusted object.

The stereoscopic information may be extracted based on at least one of information extracted based on an object size, an object height, a visual field size and aerial perspective, information extracted based on linear perspective, information extracted based on texture gradient and overlapping information between objects.

If it is determined that a first object included in the image frame is relatively more distant than a second object, the image adjusting unit decreases brightness of the first object by a first predetermined value, or increases brightness of the second object by a second predetermined value.

Further, if it is determined that a first object included in the image frame is relatively more distant than a second object, the image adjusting unit decreases saturation of the first object by a first predetermined value, or increases saturation of the second object by a second predetermined value.

The display apparatus may further include a map generating unit configured to generate a brightness map and a saturation map based on the stereoscopic information, in which the image adjusting unit may adjust at least one of brightness and saturation regarding at least one object included in the image frame based on the generated brightness map and saturation map.

Further, the display apparatus may further include an input unit configured to receive a user command, in which the image adjusting unit may adjust at least one of brightness and saturation of the image frame object according to the received user command.

The user command may be a command to set an adjustment amount of at least one of brightness and saturation of the image frame.

According to various embodiments as mentioned above, the embodiments improve presence in a 2D image environment through a signal processing, regardless of a panel definition.

These and/or other aspects and advantages will become apparent and more readily appreciated from the following description of the embodiments, taken in conjunction with the accompanying drawings of which:
FIG. 1 is a view illustrating a field of vision perceived by an observer to explain monocular cues;
FIG. 2 is a flow chart illustrating a display method according to an exemplary embodiment;
FIG. 3 is a flow chart illustrating a display method according to another exemplary embodiment;
FIG. 4 is a view illustrating a perspective felt by an observer according to brightness or saturation;
FIG. 5 is a view illustrating an image, for which at least one of brightness and saturation is adjusted; and
FIG. 6 is a block diagram illustrating a configuration of a display apparatus according to an exemplary embodiment.

Hereinafter, exemplary embodiments will be described in greater detail with reference to the accompanying drawings.

The table below shows factors in which a person perceives a stereoscopic effect.

**<Table 1>**

| Physiological factors (inborn factors) | | Psychological factors (experiential factors) |
|---|---|---|
| Binocular cues | Monocular cues | Monocular cues |
| Convergence | Accommodation | Size of Object |
| Binocular disparity | Motion Parallax | Height of Object |
| | | Visual Field Size |
| | | Aerial Perspective |
| | | Linear Perspective |
| | | Texture Gradient |
| | | Shading/Overlapping |
| | | Advancing/Receding color effect |

As shown in the above table, factors in which a person perceives a stereoscopic effect are divided into physiological factors and psychological factors.

The physiological factors, which are inborn factors, result from human's bodily features.

First of all, there are binocular cues resulting from a bodily feature of perceiving an object shape through two eyes. The binocular cues include convergence and binocular disparity, etc., among which the binocular disparity, which results from the human's bodily feature of two eyes being about 6-7 cm apart from each other in a horizontal direction, is particularly an important factor for a stereoscopic effect. That is, by the binocular disparity, eyes see an object with an angle difference, and a different image comes into each eye. When the two different images are transmitted to the brain through a retina, the two pieces of information accurately converge in the brain, thereby enabling a 3 dimensional stereoscopic image.

In contrast, the monocular cues, which one eye perceives, include accommodation and motion parallax.

The accommodation means that change in thickness of the eye lens can be varied depending on a position of an object. That is, a focal point is adjusted in such a manner that when looking at a long distance, the lens is adjusted to be thin, and when looking at a short distance, the lens is adjusted to be thick. Through the process, a person can determine distance of an object and feel a stereoscopic effect.

The motion parallax means a feeling of distance by a relative difference in position between an observer and an object. That is, an observer feels that an object in a short distance moves fast, while feeling that an object in a long distance moves slowly. It is also the case of feeling that a distant mountain moves slowly, while nearby trees move fast, when looking out the window in a train.

In addition to the physiological factors mentioned above, there are psychological factors. The psychological factor means or involves feeling a stereoscopic effect by an acquired experience. For example, the psychological factor includes a size and a height of an object, a visual field size, aerial perspective, linear perspective, texture gradient, shading, overlapping, an advancing and receding color effect, etc.

With respect to the size and height of an object, an object near to a person is felt or perceived as big and low, while an object at a distance is felt as small and high, when other conditions are the same.

The visual field size means feeling or perceiving that when objects are nearby, there are a few objects having a size which can be seen at a glance, while when objects are distant, there are many objects having a size which can be seen at a glance.

The aerial perspective means feeling that or perceiving a nearby object is seen clear, and a distant object is seen vague.

The linear perspective and texture gradient mean feeling or perceiving that the further from an observing position, the smaller the line interval and the more the images, while feeling the opposite when being closer to the observing position.

The overlapping involves a part of an object placed relatively at a back side is covered by an object placed at a front side. That is, when a part of a certain object is covered by another object, it can be determined that the covered object is an object placed at the back, while the covering object is an object placed relatively at the front.

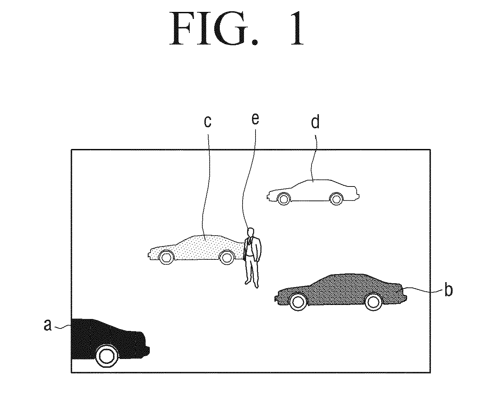

The monocular cues mentioned above will be described with reference to FIG. 1.

FIG. 1 is a view illustrating a field of vision perceived by an observer to explain the monocular cues.

Referring to FIG. 1, car (a) is the biggest object and placed at the bottommost in a visual field. In contrast, car (b) is somewhat smaller than car (a), and placed at the upper side of car (a) in a visual field. Further, car (c) is smaller than car (b) and placed at the upper side of car (b). Car (d) is the smallest of the cars, and placed at the uppermost in a visual field. When several cars are perceived in a visual field of an observer, as shown in FIG. 1, the observer would feel that car (a) is at the nearest distance, while car (d) is at the furthest distance.

Further, as shown in FIG. 1, car (b), car (c) and car (d) are all within the observer's visual field, while car (a) is not within the observer's visual field altogether, but only a part (rear part) is perceived, and thus, it is felt to be a near object relatively.

Further, an observer perceives car (a) in the deepest color, while car (b) is perceived to have the next deepest color, car (c) is perceived to have a lighter color than car (b), and car (d) is perceived to have the lightest color. Such information indicates that car (a) is the nearest to an observer, while car (d) is the most distant therefrom. It would be felt that car (b) and car (c) are placed between car (a) and car (d).

In addition, as shown in FIG. 1, person (e) covers a part of car (c). That is, person (e) and car (c) are placed while overlapping each other. In contrast, car (a) placed in the same vertical line with person (e) is not overlapped. Thus, an observer would feel that car (c) is placed behind person (e), and car (a) is placed in front of person (e). The typical known size of person (e) also provides distance cues

Through various complicated monocular cues as mentioned above, an observer determines distance of an object. From the viewpoint of a display apparatus, a user would perceive distance according to a position, a shape or a color of an object on a screen in a 2D image. In the embodiments, stereoscopic information on an input image is extracted by using such information, and by using the extracted stereoscopic information, signal processing of an image is performed so as to enable a user to better feel or perceive a stereoscopic effect. Hereafter, exemplary embodiments will be described in further detail with reference to figures.

### The display method

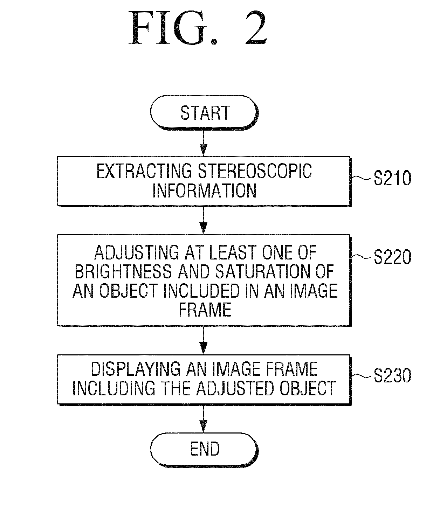

FIG. 2 is a flow chart illustrating an example of a display method according to an exemplary embodiment.

Referring to FIG. 2, the display method according to an exemplary embodiment includes: extracting stereoscopic information (S210); adjusting a color aspect of an object and, more particularly, adjusting at least one of brightness and saturation of an object of an image frame (S220); and displaying the image frame including the adjusted object (S230)

The S210 is a process of extracting stereoscopic information of an image frame. The stereoscopic information is extracted region by region of an image frame in consideration of at least one of monocular cues, such as a size, a height, a visual field size, aerial perspective, linear perspective, texture gradient, shading/overlapping, an advancing/receding color effect.

The stereoscopic information extracted in the present exemplary embodiment may be written in a depth map. The depth map refers to a table which includes depth information of each region of a display screen. Regions may be divided into or designated as a pixel unit or may be defined as a predetermined region which is bigger than a pixel unit. In this case, the depth information may be a depth regarding each region or pixel of an image frame. In an exemplary embodiment, the depth map may correspond to a 2 dimensional grey scale image with the grayscale values showing or providing a measurement of a depth of each pixel of an image frame.

In S220, at least one of brightness and saturation regarding at least one object included in the image frame is adjusted based on the extracted stereoscopic information. That is, through the extracted stereoscopic information, a distance of an object included in an image is determined. As a result, if it is determined that an object is nearby (in reality, an object felt or perceived by a user to be near), at least one of brightness or saturation is further increased, while if it is determined that an object is distant, at least one of brightness and saturation is further decreased.

Specifically, in the adjusting (S220), if it is determined that a first object included in the image frame is relatively more distant than a second object, relative brightness of the first and second objects is changed and, in particular, brightness of the first object is decreased by a first predetermined value, or brightness of the second object is increased by a second predetermined value.

In contrast, if it is determined that a first object included in the image frame is relatively closer than a second object, brightness of the first object is increased by a first predetermined value, or brightness of the second object is decreased by a second predetermined value.

Further, if it is determined that a first object included in the image frame is relatively more distant than a second object, relative brightness of the first and second objects is changed and, in particular, saturation of the first object is decreased by a first predetermined value, or saturation of the second object is increased by a second predetermined value.

In contrast, if it is determined that a first object included in the image frame is relatively closer than a second object, saturation of the first object is increased by a first predetermined value, or saturation of the second object is decreased by a second predetermined value.

In S230, an image frame including the adjusted object is displayed. That is, the image, for which a signal processing is performed as mentioned above, is displayed on various types of display panels.

Hereinafter, exemplary embodiments will be described in further detail with reference to figures.

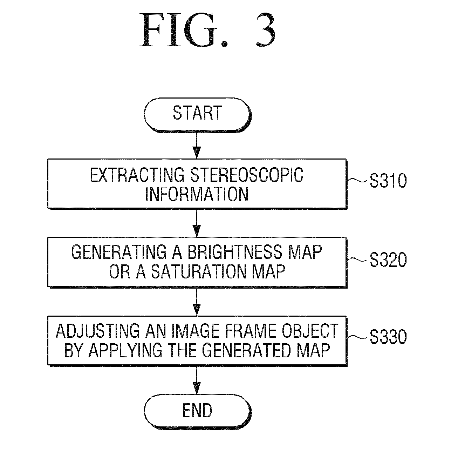

FIG. 3 is a flow chart illustrating a display method according to another exemplary embodiment.

Referring to FIG. 3, the display method according to another exemplary embodiment includes: extracting stereoscopic information (S310); generating a brightness map or a saturation map (S320); and adjusting an image frame by applying the generated map (S330).

S310 is a process for extracting stereoscopic information of an image frame. The stereoscopic information is extracted region by region of an image frame in consideration of at least one of monocular cues, such as a size and a height of the above-mentioned object, a visual field size, aerial perspective, linear perspective, texture gradient, shading/overlapping, an advancing/receding color effect.

As mentioned in the above exemplary embodiment, the stereoscopic information may be written in a depth map.

In S320, a brightness map or a saturation map is generated based on the stereoscopic information.

Herein, the brightness map may be a table which includes brightness information of each region of a display screen. Regions may be divided into a pixel unit or may be defined as a predetermined region which is bigger than a pixel unit. In this case, the brightness information may be brightness regarding each region or pixel of an image frame.

Likewise, the saturation map may be a table which includes saturation information of each region of a display screen. Regions may be divided into a pixel unit or may be defined as a predetermined region which is bigger than a pixel unit. In this case, the saturation information may be saturation regarding each region or pixel of an image frame.

Further, in S330, at least one of brightness and saturation regarding at least one object included in the image frame is adjusted based on the generated brightness map or saturation map.

That is, if it is determined that an object is nearby (an object in a region having high brightness or saturation) based on the generated brightness map or saturation map, at least one of brightness or saturation is further increased, while if it is determined that an object is distant, at least one of brightness and saturation is further decreased.

Specifically, if it is determined that a first object included in the image frame is relatively more distant than a second object, brightness of the first object is decreased by a first predetermined value, or brightness of the second object is increased by a second predetermined value.

In contrast, if it is determined that a first object included in the image frame is relatively closer than a second object, brightness of the first object is increased by a first predetermined value, or brightness of the second object is decreased by a second predetermined value.

Further, if it is determined that a first object included in the image frame is relatively more distant than a second object, saturation of the first object is decreased by a first predetermined value, or saturation of the second object is increased by a second predetermined value.

In contrast, if it is determined that a first object included in the image frame is relatively closer than a second object, saturation of the first object is increased by a first predetermined value, or saturation of the second object is decreased by a second predetermined value.

Although not illustrated in figures, displaying an image frame including the adjusted object may be further included (not shown), as mentioned in the above exemplary embodiment. That is, an image, for which a signal processing is performed, is displayed on various types of display panels.

Hereinafter, adjusting principles of the above-mentioned brightness or saturation will be described.

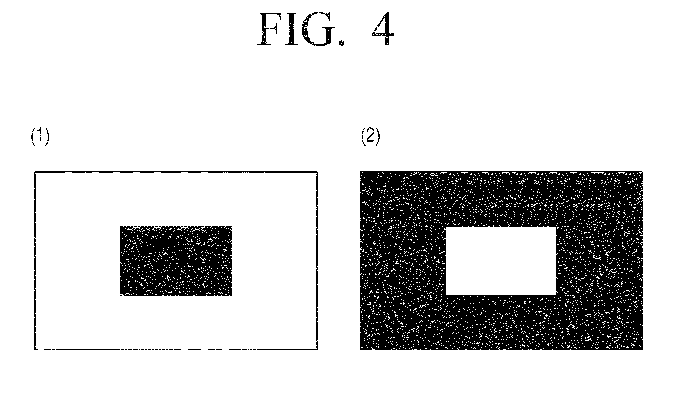

FIG. 4 is a view illustrating a perspective felt or perceived by an observer according to brightness or saturation.

FIG.4 illustrates a big box and a small box inside the big box. In (1) of FIG. 4, the big box is colored in white, whereas the small box therein is colored in black. In contrast, in (2) of FIG. 4, the big box is colored in black, whereas the small box therein is colored in white.

Under the same background conditions, a dark object is perceived to come inward, while a light object is perceived to come forward, compared with the background. That is, in (1) of FIG. 4, the small box being a dark part is perceived to be distant, while the big box being a light part is perceived to come forward or be closer. In contrast, in (2) of FIG. 4, the small box being a light part is perceived to be nearby or closer, while the big box being a dark part is perceived to be distant.

In the embodiments, at least one of brightness and saturation is adjusted so that a part perceived to be nearby is perceived to be even closer, and a part perceived to be distant is perceived to be even more distant.

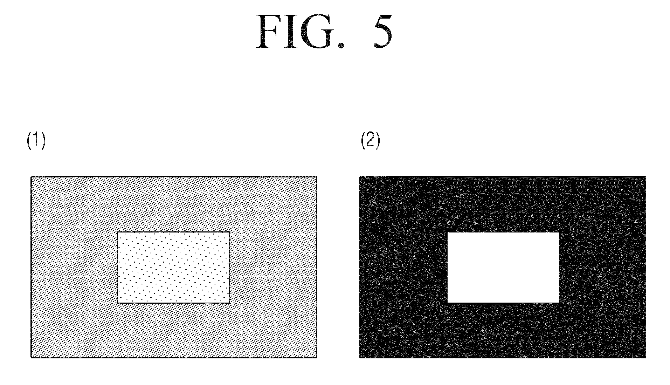

FIG. 5 is a view illustrating an image in which at least one of brightness and saturation is adjusted.
(1) of FIG. 5 illustrates an original image, in which, in the same manner as in (2) of FIG. 4, a small box being a light part is perceived to be nearby, while a big box being a dark part is perceived to be distant, and each box has its original brightness and saturation.

In the embodiments, as the big box included in the image frame is perceived to be relatively more distant than the small box, brightness of the big box is decreased by a first predetermined value, or brightness of the small box is increased by a second predetermined value.

Further, saturation of the big box is decreased by a first predetermined value, or saturation of the small box is increased by a second predetermined value.

As a result, as shown in (2) of FIG. 5, the big box is set to be seen or perceived as darker, and the small box is set to be seen lighter. Accordingly, an object perceived to be distant is felt to be more distant, and an object perceived to be nearby is felt to be closer, thereby improving a stereoscopic effect and presence.

The above-mentioned display method may further include receiving a user command (not shown), and the adjusting may adjust at least one of brightness and saturation of the image frame according to the received user command.

The user command may be a command to set an adjustment amount of at least one of brightness and saturation of the image frame.

The display method may further include displaying On Screen Display (OSD) to input the user command (not shown).

For example, an OSD menu hierarchy may be formed as below.

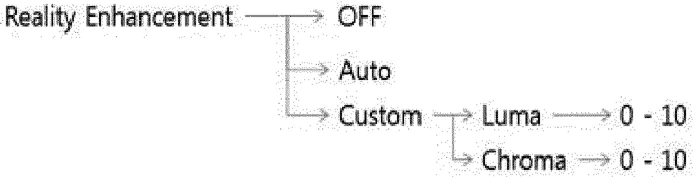

The OSD menu hierarchy includes a case of not using a menu for improving presence (OFF), a case of adjusting an image according to an automatically predetermined adjustment amount of brightness and saturation (Auto), and a case of user setting mode (Custom).

In the user setting mode (Custom), it may be selected between increasing brightness (Luma) by applying a brightness map, and increasing saturation (Chroma) by applying a saturation map.

User input may be performed by using various remote control means, such as a remote control, a smart phone, keyboard, mouse, etc. A control signal may be transmitted to a display apparatus through a near field communication means, or otherwise a control unit, such as a menu button placed on the display apparatus, may be used.

### Recording medium

The display method mentioned above may be implemented as a program including an executable algorithm which may be executed on a computer, and the program may be provided while being stored in a non-transitory computer readable medium.

The non-transitory computer readable medium refers to a medium that stores data semi-permanently, not for a short time, such as a register, a cache or a memory, and can be read through an apparatus. Specifically, various applications and programs described above may be provided while being stored in a non-transitory readable medium, such as CD, DVD, hard disc, blue-ray disc, USB, a memory card, ROM, etc.

Further, the display method may be included in an embedded system or implemented in an IC chip form.

### Display apparatus

Hereinafter, a display apparatus performing the above-mentioned method will be described.

Herein, the display apparatus may be any one of various types of computing apparatuses including a display unit. Examples of the display apparatus include a tablet PC, a smart phone, a cell phone, PC, a laptop computer, a desktop computer, TV, an electronic book, a kiosk, etc.

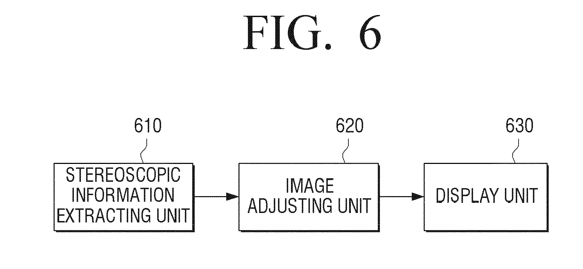

FIG. 6 is a block diagram illustrating a configuration of a display apparatus 600 according to an exemplary embodiment.

The display apparatus 600 according to an exemplary embodiment includes a stereoscopic information extracting unit 610 which may be a computer, an image adjusting unit 620 which may be a computer, and a display unit 630.

The stereoscopic information extracting unit 610 is configured to extract stereoscopic information of an image frame.

The stereoscopic information may be extracted based on at least one of information extracted based on an object size, an object height, a visual field size and aerial perspective, information extracted based on linear perspective, information extracted based on texture gradient and overlapping information between objects.

The stereoscopic information extracted from an exemplary embodiment may be written in the form of a depth map. The depth map refers to a table which includes depth information of each region of a display screen. Regions may be divided into a pixel unit or may be defined as a predetermined region which is bigger than a pixel unit. In this case, the depth information may be a depth regarding each region or pixel of an image frame. In an exemplary embodiment, the depth map may correspond to a 2 dimensional image of a grayscale showing a depth regarding each pixel of an image frame.

The image adjusting unit 620 may adjust at least one of brightness and saturation regarding at least one object included in the image frame based on the extracted stereoscopic information.

In other words, if it is determined that a first object included in the image frame is relatively more distant than a second object, brightness of the first object is decreased by a first predetermined value, or brightness of the second object is increased by a second predetermined value.

In contrast, if it is determined that a first object included in the image frame is relatively closer than a second object, brightness of the first object is increased by a first predetermined value, or brightness of the second object is decreased by a second predetermined value.

Further, if it is determined that a first object included in the image frame is relatively more distant than a second object, saturation of the first object is decreased by a first predetermined value, or saturation of the second object is increased by a second predetermined value.

In contrast, if it is determined that a first object included in the image frame is relatively closer than a second object, saturation of the first object is increased by a first predetermined value, or saturation of the second object is decreased by a second predetermined value.

Or otherwise, the display apparatus 600 may further include a map generating unit (not shown) configured to generate a brightness map or a saturation map based on the stereoscopic information.

In this case, the image adjusting unit 620 may adjust at least one of brightness or saturation regarding at least one object included in the image frame based on the generated brightness map or saturation map.

The brightness map may be a table which includes brightness information of each region of a display screen. Regions may be divided into a pixel unit or may be defined as a predetermined region which is bigger than a pixel unit. In this case, the brightness information may be brightness regarding each region or pixel of an image frame.

Likewise, the saturation map may be a table which includes saturation information of each region of a display screen. Regions may be divided into a pixel unit or may be defined as a predetermined region which is bigger than a pixel unit. In this case, the saturation information may be saturation regarding each region or pixel of an image frame.

Further, the image adjusting unit 620 may adjust at least one of brightness or saturation regarding at least one object included in the image frame based on the generated brightness map or saturation map.

That is, if it is determined that an object is nearby (an object in a region having high brightness or saturation) based on the generated brightness map or saturation map, at least one of brightness or saturation is further increased, while if it is determined that an object is distant, at least one of brightness and saturation is further decreased.

Specifically, if it is determined that a first object included in the image frame is relatively more distant than a second object, brightness of the first object is decreased by a first predetermined value, or brightness of the second object is increased by a second predetermined value.

In contrast, if it is determined that a first object included in the image frame is relatively closer than a second object, brightness of the first object is increased by a first predetermined value, or brightness of the second object is decreased by a second predetermined value.

Further, if it is determined that a first object included in the image frame is relatively more distant than a second object, saturation of the first object is decreased by a first predetermined value, or saturation of the second object is increased by a second predetermined value.

In contrast, if it is determined that a first object included in the image frame is relatively closer than a second object, saturation of the first object is increased by a first predetermined value, or saturation of the second object is decreased by a second predetermined value.

The display unit 630 is configured to display an image frame including the adjusted obj ect.

The display unit 630 may be implemented by various display technologies, such as Organic Light Emitting Diodes (OLED), Liquid Crystal Display Panel (LCD Panel), Plasma Display Panel (PDP), Vacuum Fluorescent Display (VFD), Field Emission Display (FED), Electro Luminescence Display (ELD), etc. Further, the display unit 630 may be implemented by a flexible display or a transparent display, etc.

The display apparatus 600 mentioned above may further include an input unit (not shown) configured to receive a user command, and the image adjusting unit 620 may adjust at least one of brightness and saturation of the image frame according to the received user command.

The user command may be a command to set an adjustment amount of at least brightness and saturation of the image frame object.

According to the above various exemplary embodiments, presence may be improved in a 2D environment through a signal processing regardless of a panel definition.

Even though the discussion has called for adjusting the value (brightness or saturation) of one object, such as the small box in FIG. 5, it is possible to adjust the value of both objects, such as the small and big boxes of FIG. 5, by increasing the value of one object and decreasing the value of the other object.

Although various embodiments of the present invention have been illustrated and described, it will be appreciated by those skilled in the art that changes may be made in these embodiments without departing from the invention, the scope of which is defined in the appended claims.

## Claims

1. A display method, comprising:
extracting stereoscopic information of an image frame;
adjusting at least one of brightness and saturation regarding at least one object included in the image frame based on the extracted stereoscopic information to produce an adjusted object; and
displaying the image frame including the adjusted object.

2. The display method as claimed in claim 1, wherein the stereoscopic information is extracted based on at least one of information extracted based on an object size, an object height, a visual field size and aerial perspective, a linear perspective, a texture gradient and overlapping information between objects.

3. The display method as claimed in claim 1 or 2, wherein if it is determined that a first object included in the image frame is relatively more distant than a second object, the adjusting comprises one of decreasing brightness of the first object by a first predetermined value and increasing brightness of the second object by a second predetermined value.

4. The display method as claimed in claim 1 or 2, wherein if it is determined that a first object included in the image frame is relatively more distant than a second object, the adjusting comprises one of decreasing saturation of the first object by a first predetermined value and increasing saturation of the second object by a second predetermined value.

5. The display method as claimed in claim 1 to 3, further comprising generating a least one of a brightness map and a saturation map based on the stereoscopic information,
wherein the adjusting adjusts brightness and saturation regarding at least one object included in the image frame based on the one of the generated brightness map and the saturation map.

6. The display method as claimed in claim 1 to 3, further comprising receiving a user command,
wherein the adjusting adjusts at least one of brightness and saturation of the image frame object according to the received user command.

7. The display method as claimed in claim 6, wherein the user command is a command to set an adjustment amount of the at least one of brightness and saturation.

8. The display method as claimed in claim 1 to 3, wherein when objects in the frame image are at different relative distances, relative brightness of the objects is changed.

9. The display method as claimed in claim 1 to 3, wherein when objects in the frame image are at different relative distances, relative saturation of the objects is changed.

10. A non-transitory recording medium in which a program to perform the display method as claimed in any one of claims 1 to 9 is recorded.

11. A display apparatus, comprising:
a stereoscopic information extracting unit configured to extract stereoscopic information of an image frame;
an image adjusting unit configured to adjust at least one of brightness and saturation regarding at least one object included in the image frame based on the extracted stereoscopic information to produce an adjusted object; and
a display unit configured to display the image frame including the adjusted obj ect.

12. The display apparatus as claimed in claim 11, wherein the stereoscopic information is extracted based on at least one of information extracted based on an object size, an object height, a visual field size and aerial perspective, a linear perspective, a texture gradient and overlapping information between objects.

13. The display apparatus as claimed in claim 11 or 12, wherein if it is determined that a first object included in the image frame is relatively more distant than a second object, the image adjusting unit performs one of decreasing brightness of the first object by a first predetermined value and increasing brightness of the second object by a second predetermined value.

14. The display apparatus as claimed in claim 11 or 12, wherein if it is determined that a first object included in the image frame is relatively more distant than a second object, the image adjusting unit performs one of decreasing saturation of the first object by a first predetermined value and increasing saturation of the second object by a second predetermined value.

15. The display apparatus as claimed in claim 11 to 13, further comprising a map generating unit configured to generate at least one of a brightness map and a saturation map based on the stereoscopic information,
wherein the image adjusting unit adjusts at least one of brightness and saturation regarding at least one object included in the image frame based on the at least one of the generated brightness map and the saturation map.
